# EUROPEAN PATENT SPECIFICATION

(11) **EP 2 217 830 B1**
(45) Date of publication and mention of the grant of the patent: **18.04.2012**
(21) Application number: 08862254.3
(22) Date of filing: 09.12.2008
(51) Int. Cl.: F16G 1/28, F16H 55/17, F16H 7/02

(54) **BELT AND SPROCKET**
RIEMEN UND ZAHNRAD
COURROIE ET POULIE DENTEE

(30) Priority: 14.12.2007 US 2127
(43) Date of publication of application: 18.08.2010
(73) Proprietor: The Gates Corporation, Denver, CO 80202 (US)
(72) Inventor: GAYNOR, John, Centennial, CO 80122 (US)
(74) Representative: Tunstall, Christopher Stephen
(86) International application number: PCT/US2008/013524
(87) International publication number: WO 2009/078930

(56) References cited:
- EP-A1- 0 106 694
- FR-A1- 2 796 692
- JP-A- 63 047 536
- JP-A- 2002 364 709
- JP-B2- 7 001 051
- US-A- 3 756 091

## Description

### Field of the Invention

The invention relates to a belt having a tooth tip engaging a predetermined portion of the sprocket groove such that the tensile cord is supported in a manner to cause the tensile cord to have a substantially arcuate form between the tooth roots.

### Background of the Invention

The prior art belt and sprocket system is based on a mold groove profile and requires clearance between the belt tooth tip and the bottom of the pulley groove. There is also some shrinkage in the belt tooth height after curing that increases this clearance between the belt tooth tip and pulley groove bottom. This clearance causes the pitch line of the belt to become chordal over the pulley groove as the belt teeth in rack form mesh with the sprocket grooves. As the belt pitch line is repeatedly raised and lowered by the driver and driven sprocket teeth, the angular velocity of the driven sprocket alternately increases and decreases. This cogging action can be amplified by a bicycle peddle crank arm and then can be felt as a vibration, for example, by a bicycle rider.

Representative of the art is US patent no.3,756,091 to Miller which discloses a toothed power transmission belt and pulley system is disclosed wherein the belt has an endless substantially inextensible tensile member with teeth secured thereto, the teeth having a cross-sectional configuration composed of two circular intersecting arcs for meshing with mating, conjugate, curvilinear pulley teeth. The size of teeth, length of radii of curvature, and the angles and point of intersection are determined by a set of design criteria and formulas as recited therein.

FR 2 796 692 discloses a system according to the preamble of claim 1.

What is needed is a belt having a tooth tip engaging a predetermined portion of the sprocket groove such that the tensile cord is supported in a manner to cause the tensile cord to have a substantially arcuate form between the tooth roots. The present invention meets this need.

### Summary of the Invention

The primary aspect of the invention is to provide a belt having a tooth tip engaging a predetermined portion of the sprocket groove such that the tensile cord is supported in a manner to cause the tensile cord to have a substantially arcuate form between the tooth roots.

Other aspects of the invention will be pointed out or made obvious by the following description of the invention and the accompanying drawings.

The invention comprises a belt and sprocket system as recited in the claims.

### Brief Description of the Drawings

The accompanying drawings, which are incorporated in and form a part of the specification, illustrate preferred embodiments of the present invention, and together with a description, serve to explain the principles of the invention.
Fig. 1 is a profile of a prior art belt and sprocket showing the chordal effect.
Fig. 2 is a side view of a sprocket groove.
Fig. 2a and Fig. 2b are each a table of example dimensions.
Fig. 3 is a side view of a belt tooth.
Fig. 3a and Fig. 3b are each a table of example dimensions.
Fig. 4 is a side view of a belt tooth in a groove, not according to the invention.
Fig. 5 is a side view of the inventive belt tooth and sprocket.

### Detailed Description of the Preferred Embodiment

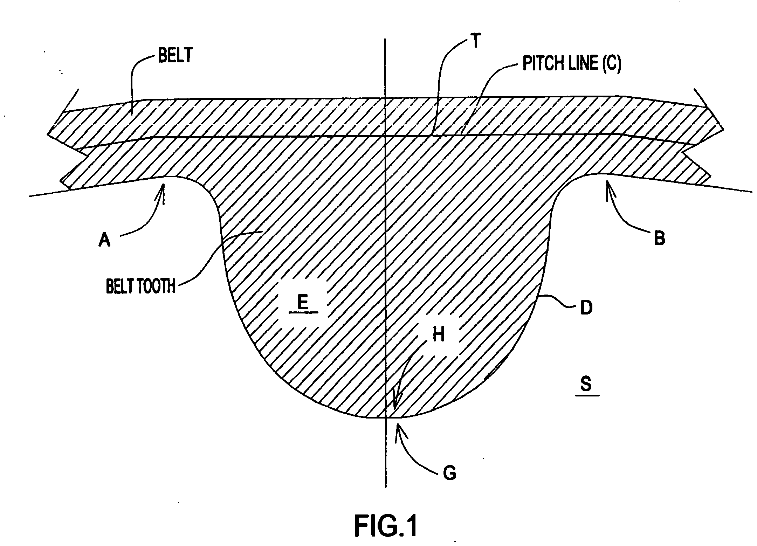

Fig. 1 is a profile of a prior art belt and sprocket showing the chordal effect. A prior art toothed belt system comprises a belt having a pitch line (C). The pitch line generally coincides with the tensile cord T location in the belt body, but this is not always the case. The tensile cord carries the belt load during operation of the belt in a belt drive system. Fig. 1 is a side view of the belt and sprocket. In the art, a "tooth" is disposed across the width of a belt and typically arranged on a normal to the tensile cords.

The toothed belt typically engages a sprocket (S) having a groove (D). A belt tooth (E) engages a sprocket groove (D). Fig. 1 is a depiction of a portion of the sprocket engaged with one belt tooth. Typically a number of teeth will engage each sprocket.

The belt bears upon the outer surface of the sprocket which includes portion (A) and (B). A sprocket generally comprises a mechanical device which engages a toothed belt. Each groove on the sprocket extends parallel to the axis of rotation.

In operation the pitch line "spans" between A and B causing the pitch line (C) and hence tensile cord T to be substantially linear between A and B. This is because during production there is some shrinkage of the tooth or a clearance may be required. This can result in a gap or non-loaded condition between the groove bottom G and the tooth tip H. This in turn causes the pitch line of the belt to become chordal (linear) over the pulley groove portions (A and B) as the belt teeth in rack form mesh with the sprocket grooves. Points A and B are approximately where the sprocket engages the tooth root.

Consequently, as the belt pitch line is raised and lowered by the sprocket teeth, the angular velocity of the sprocket alternately increases and decreases. This can cause an undesirable vibration in a belt drive system that can be detected by a user, for example, on a bicycle.

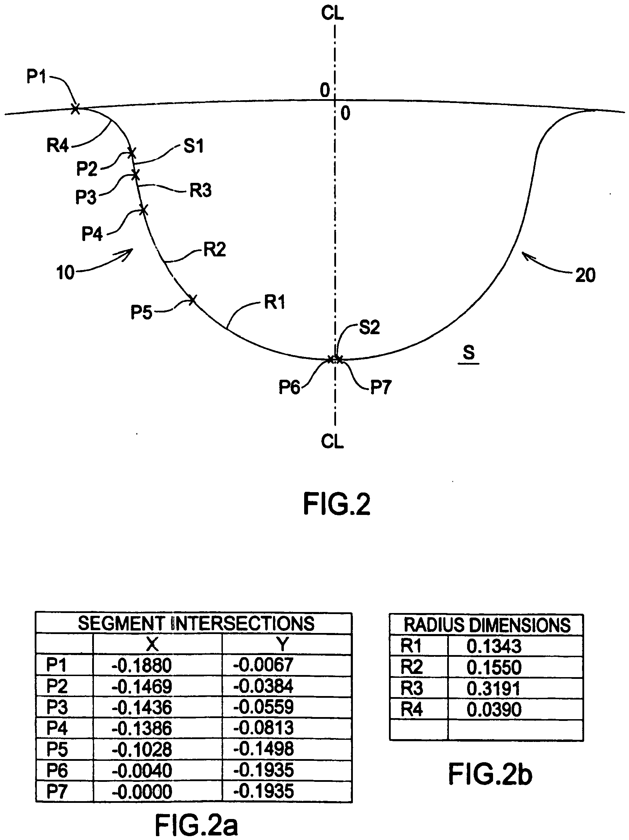

Fig. 2 is a side view of a sprocket groove. The inventive system comprises a belt and sprocket.

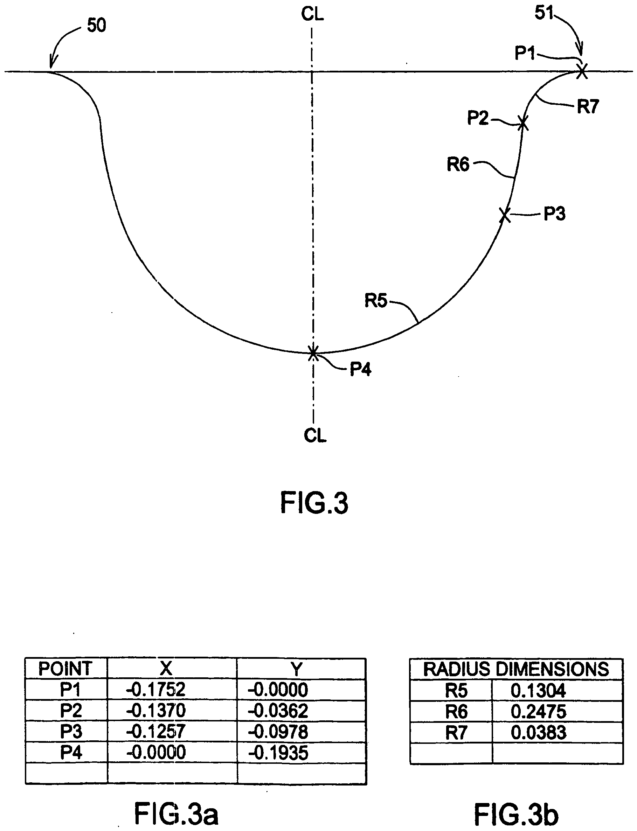

An example sprocket groove is dimensioned as shown in Fig. 2a. The values in Fig. 2a and Fig. 3a are given as examples only and are not intended to limit the breadth of the invention.

The groove comprises two halves jointed together, 10 and 20, about a centerline CL. Each half comprises three radii R1, R2, R3 connected in series. A substantially linear segment S1 is connected between R3 and R4. Each radii described in this specification is a segment of a circle, meaning each radii is substantially constant. In an alternate embodiment, each radius R1 or R2 or R3 may vary as a function of dR/dx as may be required by the operational conditions.

Further each radius R1 for each half of the groove is connected by a linear segment S2. Each segment S1 and S2 provide a predetermined clearance between the groove and tooth in order to facilitate engagement of the tooth with the groove during operation.

The inventive belt body may comprise any conventional and/or suitable cured or thermoplastic elastomer composition. Suitable elastomers that may be utilized for this purpose include for example polyurethane elastomers (including as well polyurethane/urea elastomers) (PU), polychloroprene rubber (CR), acrylonitrile butadiene rubber (NBR), hydrogenated NBR (HNBR), styrene-butadiene rubber (SBR), alkylated chlorosulfonated polyethylene (ACSM), epichlorohydrin, polybutadiene rubber (BR), natural rubber (NR), and ethylene alpha olefin elastomers such as ethylene propylene copolymers (EPM), ethylene propylene diene terpolymers (EPDM), ethylene octene copolymers (EOM), ethylene butene copolymers (EBM), ethylene octene terpolymers (EODM); and ethylene butene terpolymers (EBDM); and silicone rubber, or a combination of any two or more of the foregoing. The tensile cord may comprise polyester, carbon fiber, metal wire, nylon, aramid, glass or any combination of two or more of the foregoing in any suitable and/or conventional configuration such as plied or braided, and generally may comprise one or a plurality of strands which may themselves be of any suitable and/or conventional configuration such as plied or braided, and generally may comprise one or a plurality of yarns. "Yarn" refers to a bundle of filaments or fibers in the form as received from a yarn manufacturer, which may include twisted yarn or yarn with no twist. "Strand" refers to a yarn or yarns that have been twisted, plied or braided as an intermediate step in forming a cord.

Fig. 3 is a side view of a belt tooth. The tooth profile comprises radii R5, R6 and R7, each radii being joined in series between points P4 and P1. For reference purposes point P4 is disposed on centerline CL. Point P1 is disposed at a tooth root 50, 51. There are no linear segments included in the tooth profile as is the case for the groove profile in Fig. 2. Example dimensional values for the Cartesian coordinate locations for points P1, P2, P3 and P4 are included in Fig. 3a.

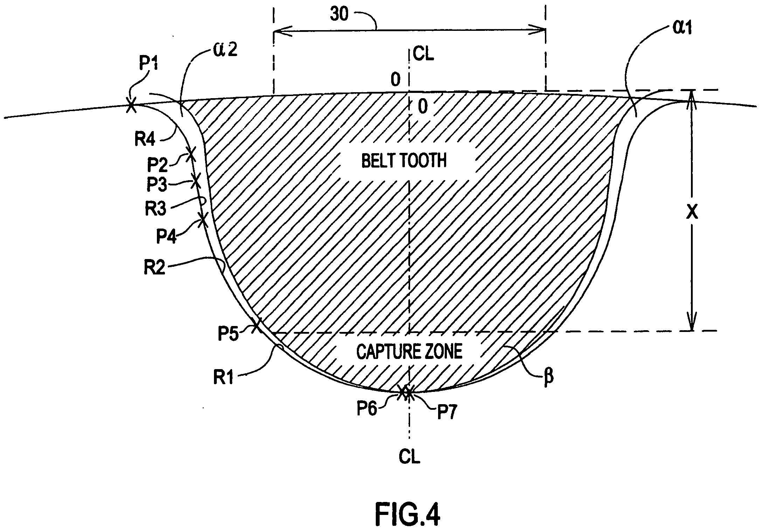

Fig. 4 is a side view of a belt tooth in a groove not according to the invention. Due to the slightly differing dimensions between the tooth and the groove, there are two gaps (α1) and (α2) disposed between the flanks of the tooth and the groove. In this embodiment the tip of the tooth contacts the bottom of the groove.

Also disclosed is a capture zone β at the end of the tooth in the groove bottom wherein the tooth is "captured" within the groove. This means that in operation, the tooth tip undergoes compression under load in the groove bottom in a manner which supports the overlying portion of the tensile cord T in a substantially arcuate form, see portion 30. However, the entire tooth is not fully compressed, instead, it is only the portion of the tooth occupying the groove between groove bottom and point P5. This also corresponds to the radius portions R1 on each side of centerline CL.

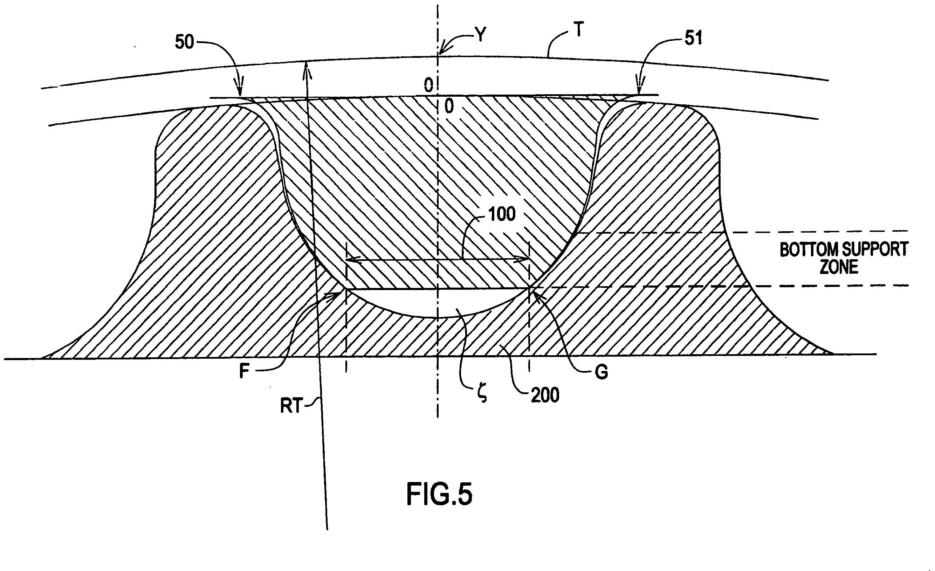

When the belt and tooth is fully engaged during operation, the tooth material expands to substantially occupy gaps (α1) and (α2). This occurs simultaneously with the tensile cord portion 30 being supported by the material within the zone β. As a result of the support the tensile cord T takes a substantially arcuate form between roots 50, 51 with a radius RT, see Fig. 5. This results in significantly reduced vibration of the belt during operation.

Example dimensions are set out in Fig. 2a. Reference to all dimensions is with respect to the origin at (0,0). The approximate position of the upper portion of the zone β is at a distance "x" from coordinate 0,0.

Fig. 5 is a side view of the inventive belt tooth and sprocket. In this embodiment there is a gap or missing material in the bottom of the groove. This results in a free volume ζ into which the tooth tip may be slightly expanded. However, the tooth bears upon the groove at F and G. The portion of the tooth tip surface 100 between F and G approximates a simply supported beam with an equally distributed load. The absence of the tooth tip and free volume ζ can also be achieved by elimination of a portion 200 of the groove bottom, also referred to as a slot.

The width of portion 100 may be adjusted according to the operational conditions of the system. In this embodiment the surface portion 100 is substantially flat. Coordinate 0,0 is disposed a predetermined distance "y" from a tensile cord T.

Although a form of the invention has been described herein, it will be obvious to those skilled in the art that variations may be made in the construction and relation of parts without departing from the scope of the invention described herein.

## Claims

1. A belt and sprocket system comprising:
a tensile cord (T) disposed within a belt body;
a tooth projecting from the belt body;
the tooth having a profile having at least two unequal radii (R5, R6) connected in series and disposed between a tooth tip and a tooth root;
a sprocket having a groove for receiving the tooth, the groove profile comprising at least one substantially linear portion (S1) disposed between the at least two unequal radii whereby a gap (α1) is formed between a tooth flank and the groove;
the tooth tip engaging a predetermined portion of the sprocket groove such that the tensile cord is supported in a manner to cause the tensile cord to have a substantially arcuate form between the tooth roots; **characterised by**:
a gap between the tooth tip and bottom of the sprocket groove, thereby forming a free volume (ζ) between the tooth tip and the sprocket groove into which the tooth tip can expand.

2. The system as in claim 1, wherein the groove further comprises a second substantially linear portion (S2) disposed at a groove bottom between adjacent and substantially equal radii.

3. The system as in claim 1, wherein the tooth tip is substantially flat.

4. The system as in claim 1, wherein a portion of the groove bottom is omitted to form a slot.

## Patentansprüche

1. Riemen- und Kettenradsystem mit
einem in einem Riemenkörper angeordneten Zugcord (T),
einem vom Riemenkörper vorragenden Zahn,
wobei der Zahn ein Profil mit mindestens zwei ungleichen Radien (R5, R6) hat, die in Reihe geschaltet und zwischen einer Zahnspitze und einer Zahnwurzel angeordnet sind, und
einem Kettenrad mit einer Nut zur Aufnahme des Zahns, wobei das Nutprofil mindestens einen im Wesentlichen linearen Abschnitt (S1) umfasst, der zwischen den mindestens zwei ungleichen Radien angeordnet ist, wodurch zwischen einer Zahnflanke und der Nut ein Spalt (α1) gebildet ist,
wobei die Zahnspitze einen vorbestimmten Abschnitt der Kettenradnut so in Eingriff nimmt, dass der Zugcord so gestützt ist, dass veranlasst wird, dass der Zugcord zwischen den Zahnwurzeln im Wesentlichen bogenförmig ist, **gekennzeichnet durch**
einen Spalt zwischen der Zahnspitze und dem Boden der Kettenradnut, wodurch zwischen der Zahnspitze und der Kettenradnut ein freies Volumen (ζ) gebildet wird, in das sich die Zahnspitze ausdehnen kann.

2. System nach Anspruch 1, wobei die Nut ferner einen zweiten im Wesentlichen linearen Abschnitt (S2) umfasst, der an einem Nutboden zwischen benachbarten und im Wesentlichen gleichen Radien angeordnet ist.

3. System nach Anspruch 1, wobei die Zahnspitze im Wesentlichen flach ist.

4. System nach Anspruch 1, wobei ein Abschnitt des Nutbodens zur Bildung eines Schlitzes ausgenommen ist.

## Revendications

1. Système de courroie et roue dentée, comprenant :
une corde de traction (T) disposée à l'intérieur d'un corps de courroie ;
une dent faisant saillie à partir du corps de courroie ;
la dent présentant un profil ayant au moins deux rayons inégaux (R5, R6) reliés en série et
disposés entre un sommet de dent et un pied de dent ;
une roue dentée ayant une gorge destinée à recevoir la dent, le profil de la gorge comprenant au moins une partie sensiblement linéaire (S1) disposée entre les au moins deux rayons inégaux,
un espace (α1) étant formé entre un flanc de dent et la gorge ;
le sommet de dent s'engageant avec une partie prédéterminée de la gorge de roue dentée, de telle sorte que la corde de traction soit supportée de manière telle qu'elle ait une forme sensiblement arquée entre les pieds de dent ; **caractérisé par** :
un espace entre le sommet de dent et le fond de la gorge de roue dentée, formant ainsi un volume libre (ξ) entre le sommet de dent et la gorge de roue dentée, à l'intérieur duquel volume libre le sommet de dent peut se dilater.

2. Système selon la revendication 1, dans lequel la gorge comprend en outre une deuxième partie sensiblement linéaire (S2) disposée au niveau d'un fond de gorge entre des rayons adjacents et sensiblement égaux.

3. Système selon la revendication 1, dans lequel le sommet de dent est sensiblement plat.

4. Système selon la revendication 1, dans lequel une partie du fond de gorge est supprimée afin de former une fente.
